# EUROPEAN PATENT APPLICATION

(11) **EP 4 797 627 A1**
(43) Date of publication of application: **26.08.2026**
(21) Application number: 26154073.6
(22) Date of filing: 26.01.2026
(51) Int. Cl.: H04L 12/40, H04L 12/413

(54) **COMMUNICATION DEVICE, VEHICLE, COMMUNICATION METHOD, AND NON-TRANSITORY STORAGE MEDIUM**

(30) Priority: 25.02.2025 JP 2025028015
(71) Applicant: Toyota Jidosha Kabushiki Kaisha, Toyota-shi, Aichi-ken 471-8571 (JP)
(72) Inventor: NAKANE, Hidetaka, Toyota-shi, 471-8571 (JP)
(74) Representative: J A Kemp LLP

(57) **Abstract**

Communication devices (10) exchange pieces of data each including an identifier. The identifier indicates a priority rank and is in a format of either a first format or a second format. When transmitted pieces of data collide, the communication device (10) executes an arbitration process of comparing the identifier included in first data it is transmitting and the identifier included in the other colliding second data. When the communication device (10) transmits data including the identifier in the second format and that data collides with other data, the communication device (10) executes the arbitration process while executing a correction process of correcting the identifier such that the data it is transmitting has a lower priority rank than the other data. When the communication device (10) transmits data including the identifier in the first format and that data collides with other data, the communication device (10) executes the arbitration process without executing the correction process.

## Description

### BACKGROUND OF THE INVENTION

### 1. Field of the Invention

The present disclosure relates to a communication device, a vehicle, a communication method, and a non-transitory storage medium.

### 2. Description of Related Art

Japanese Patent No. 6281917 (JP 6281917 B) describes a communication network system based on a CAN protocol. "CAN" stands for "Controller Area Network". In this communication network system, a message having an arbitration part is transmitted. Among constituent elements of data, the arbitration part is a data part that is used when two pieces of data collide with each other in the communication network system to perform an arbitration process of determining of which piece of data the transmission should be continued.

The arbitration part includes an identifier indicating a priority rank of the transmitted data. In this communication network system, there are two types of identifiers included in transmitted data: an identifier with a bit length of 11 bits and an identifier with a bit length of 29 bits.

### SUMMARY OF THE INVENTION

In the arbitration process, for example, data that is given a smaller value as the identifier is prioritized. In a communication network system, when there is a plurality of types of identifiers included in pieces of data transmitted, a piece of data including an identifier that is supposed to be prioritized may fail to be appropriately prioritized in the arbitration process.

A communication device according to one embodiment of the present disclosure is a communication device in a communication network system. The communication network system includes a plurality of communication devices, and the communication devices exchange pieces of data each including an identifier through communication based on a CAN protocol. In the communication network system, the identifier indicates a priority rank of data and is in a format of either a first format or a second format different from the first format. The communication network system is configured such that when two pieces of data respectively transmitted from the communication devices collide with each other, each of the communication devices executes an arbitration process of comparing the identifier included in first data transmitted by the communication device and the identifier included in colliding second data transmitted by the other communication device, and continuing the transmission of the first data when the first data has a higher priority rank than the second data and stopping the transmission of the first data when the first data has a lower priority rank than the second data. The communication device includes a processing circuit. The processing circuit is configured to execute: when the first data includes the identifier formed in the second format and, as a result of transmitting the first data, the first data collides with the second data transmitted by the other communication device, executing the arbitration process while executing a correction process of correcting the identifier included in the first data such that the first data has a lower priority rank than the colliding second data; and when the first data includes the identifier formed in the first format and, as a result of transmitting the first data, the first data collides with the second data transmitted by the other communication device, executing the arbitration process without executing the correction process.

A vehicle according to another embodiment of the present disclosure includes a communication device. The communication device is the communication device in a communication network system. The communication network system includes a plurality of communication devices, and the communication devices exchange pieces of data each including an identifier through communication based on a CAN protocol. In the communication network system, the identifier indicates a priority rank of data and is in a format of either a first format or a second format different from the first format. The communication network system is configured such that when two pieces of data respectively transmitted from the communication devices collide with each other, each of the communication devices executes an arbitration process of comparing the identifier included in first data transmitted by the communication device and the identifier included in colliding second data transmitted by the other communication device, and continuing the transmission of the first data when the first data has a higher priority rank than the second data and stopping the transmission of the first data when the first data has a lower priority rank than the second data. The communication device includes a processing circuit. The processing circuit is configured to execute: when the first data includes the identifier formed in the second format and, as a result of transmitting the first data, the first data collides with the second data transmitted by the other communication device, executing the arbitration process while executing a correction process of correcting the identifier included in the first data such that the first data has a lower priority rank than the colliding second data; and when the first data includes the identifier formed in the first format and, as a result of transmitting the first data, the first data collides with the second data transmitted by the other communication device, executing the arbitration process without executing the correction process.

A communication method according to another embodiment of the present disclosure is a communication method in a communication network system. The communication network system has a plurality of communication devices as components, and the communication devices exchange pieces of data each including an identifier through communication based on a CAN protocol. The identifier indicates a priority rank of data and is in a format of either a first format or a second format different from the first format. The communication network system is configured such that when two pieces of data respectively transmitted from the communication devices collide with each other, each of the communication devices executes an arbitration process of comparing the identifier included in first data transmitted by the communication device and the identifier included in colliding second data transmitted by the other communication device, and continuing the transmission of the first data when the first data has a higher priority rank than the second data and stopping the transmission of the first data when the first data has a lower priority rank than the second data. The communication method includes: that when the first data includes the identifier formed in the second format and, as a result of transmitting the first data, the first data collides with the second data transmitted by the other communication device, the communication device executes the arbitration process while executing a correction process of correcting the identifier included in the first data such that the first data has a lower priority rank than the colliding second data; and that when the first data includes the identifier formed in the first format and, as a result of transmitting the first data, the first data collides with the second data transmitted by the other communication device, the communication device executes the arbitration process without executing the correction process.

A non-transitory storage medium according to another embodiment of the present disclosure stores instructions that are executable by a processing circuit of a communication device in a communication network system. The communication network system has a plurality of communication devices as components, and the communication devices exchange pieces of data each including an identifier through communication based on a CAN protocol. The identifier indicates a priority rank of data and is in a format of either a first format or a second format different from the first format. The communication network system is configured such that when two pieces of data respectively transmitted from the communication devices collide with each other, each of the communication devices executes an arbitration process of comparing the identifier included in first data transmitted by the communication device and the identifier included in colliding second data transmitted by the other communication device, and continuing the transmission of the first data when the first data has a higher priority rank than the second data and stopping the transmission of the first data when the first data has a lower priority rank than the second data. The non-transitory storage medium stores instructions that are executable by the processing circuit of the communication device and that cause the processing circuit to perform functions including: when the first data includes the identifier formed in the second format and, as a result of transmitting the first data, the first data collides with the second data transmitted by the other communication device, executing the arbitration process while executing a correction process of correcting the identifier included in the first data such that the first data has a lower priority rank than the colliding second data; and when the first data includes the identifier formed in the first format and, as a result of transmitting the first data, the first data collides with the second data transmitted by the other communication device, executing the arbitration process without executing the correction process.

The bit length of the identifier in the first format may be shorter than the bit length of the identifier in the second format.

The bit length of the identifier in the first format may be 11 bits and the bit length of the identifier in the second format may be 29 bits.

The communication device may be an electronic control device installed in a vehicle. The processing circuit may be configured to execute: forming, in the first format, a control frame that is the identifier indicating that the data is data transmitted for control of the vehicle; and forming, in the second format, a diagnostic frame that is the identifier indicating that the data is data transmitted for failure diagnosis of the vehicle.

The processing circuit may be configured to execute forming, in the first format, a management frame that is the identifier indicating that the data is data transmitted to manage a communication state in the communication network system.

A plurality of communication devices may compose a communication network, and the communication network system may include a plurality of communication networks. The communication devices may include a communication device that is a relay device that relays pieces of data exchanged among the communication networks.

The above-described communication device, vehicle, communication method, and communication program can reduce the likelihood of an incident where data that is supposed to be prioritized fails to be prioritized.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic view showing a configuration of a vehicle including communication devices of one embodiment;
FIG. 2 is a view showing a format of data transmitted by the communication devices of FIG. 1;
FIG. 3 is a view showing a standard arbitration part included in data transmitted by the communication devices of FIG. 1;
FIG. 4 is a view showing an extended arbitration part included in data transmitted by the communication devices of FIG. 1;
FIG. 5 is a view showing signals composing data A and signals composing data B;
FIG. 6 is a view showing signals composing data C and signals composing data D;
FIG. 7 is a table showing types of identifiers in a first format transmitted by the communication devices of FIG. 1;
FIG. 8 is a table showing types of identifiers in a second format transmitted by the communication devices of FIG. 1;
FIG. 9 is a view showing signals composing a control frame indicating "636" as a hexadecimal number, signals composing a physical address frame, signals composing a function address frame, and signals composing a control frame indicating "637" as a hexadecimal number;
FIG. 10 is a flowchart showing a sequence of processing executed by the communication devices when transmitting data having an identifier in the first format;
FIG. 11 is a flowchart showing a sequence of processing executed by the communication devices when transmitting data having an identifier in the second format; and
FIG. 12 is a view showing signals composing data before correction and signals composing data after the correction.

### DETAILED DESCRIPTION OF EMBODIMENTS

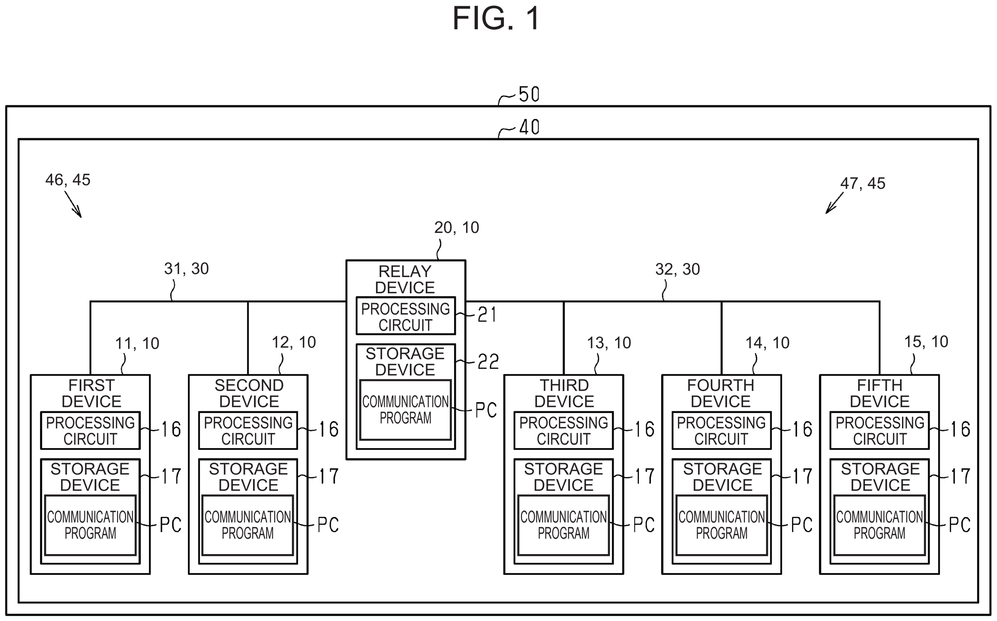

In the following, one embodiment of a communication device will be described with reference to FIG. 1 to FIG. 12.

### Configuration of Vehicle 50

As shown in FIG. 1, a vehicle 50 includes a communication network system 40. The communication network system 40 includes a plurality of communication devices 10. The communication device 10 is an electronic control device included in the vehicle 50. The communication device 10 realizes a specific function in the vehicle 50 by communicating with the other communication devices 10 in the communication network system 40.

The communication network system 40 includes, as the communication devices 10, a first device 11, a second device 12, a third device 13, a fourth device 14, a fifth device 15, and a relay device 20. Of the communication devices 10, the first device 11, the second device 12, the third device 13, the fourth device 14, and the fifth device 15 each include a processing circuit 16 and a storage device 17. The storage device 17 stores a program. The processing circuit 16 executes various processes by executing the program stored in the storage device 17. The processing circuit 16 includes a processor.

As shown in FIG. 1, the storage device 17 stores a communication program PC. The communication program PC causes the processing circuit 16 to execute a process relating to communication with the other communication devices 10 in the communication network system 40.

Of the communication devices 10, the relay device 20 includes a processing circuit 21 and a storage device 22. The storage device 22 stores a program. The processing circuit 21 executes various processes by executing the program stored in the storage device 22. The processing circuit 21 includes a processor.

As shown in FIG. 1, the storage device 22 stores a communication program PC. The communication program PC causes the processing circuit 21 to execute a process relating to communication with the other communication devices 10 in the communication network system 40.

In the communication network system 40, the communication devices 10 exchange pieces of data through communication based on a CAN protocol. "CAN" stands for "Controller Area Network."

The communication network system 40 includes, as the communication networks 45, a first communication network 46 and a second communication network 47. The communication network 45 is a group of communication devices 10 that are connected by a same communication bus 30. The communication network system 40 includes, as the communication bus 30, a first bus 31 and a second bus 32.

As shown in FIG. 1, the first bus 31 is connected to the first device 11, the second device 12, and the relay device 20. The first device 11 and the second device 12 exchange pieces of data with the other communication devices 10 through the first bus 31. The first device 11 and the second device 12 compose the first communication network 46.

As shown in FIG. 1, the second bus 32 is connected to the third device 13, the fourth device 14, the fifth device 15, and the relay device 20. The third device 13, the fourth device 14, and the fifth device 15 exchange pieces of data with the other communication devices 10 through the second bus 32. The third device 13, the fourth device 14, and the fifth device 15 compose the second communication network 47.

The relay device 20 is connected to both of the first bus 31 and the second bus 32. In other words, the relay device 20 is connected to both of the first communication network 46 and the second communication network 47. The relay device 20 relays data exchanged between the communication networks 45.

The relay device 20 receives, through the first bus 31, data transmitted in the first communication network 46, and transmits that data to the second bus 32 to transmit that data toward the second communication network 47. The relay device 20 receives, through the second bus 32, data transmitted in the second communication network 47, and transmits that data to the first bus 31 to transmit that data toward the first communication network 46. The relay device 20 can simultaneously and concurrently execute relaying of data in the direction from the first communication network 46 toward the second communication network 47 and relaying of data in the direction from the second communication network 47 toward the first communication network 46.

### Data Exchanged among Communication Devices 10

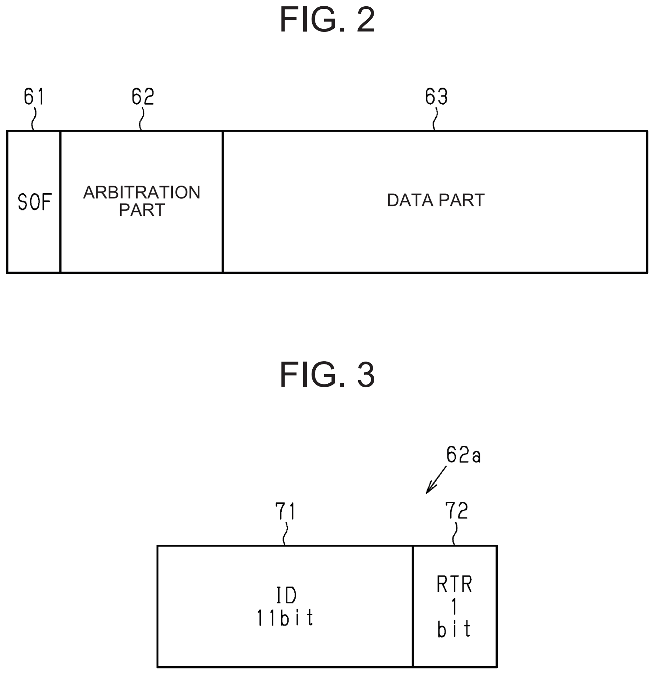

FIG. 2 shows a format of data exchanged among the communication devices 10. As shown in FIG. 2, data is composed of an SOF 61, an arbitration part 62, and a data part 63. In FIG. 2, the constituent elements of the data are transmitted to the communication bus 30 in the order shown from left to right.

The SOF 61 is a part that is transmitted first in the data. "SOF" stands for "Start Of Frame". The SOF 61 indicates a start position in the data. The SOF 61 is one-bit long and dominant. That is, the SOF 61 is a signal indicating zero.

The arbitration part 62 is a data part that is transmitted after the SOF 61 in the data. As will be described later, when data transmitted by the communication device 10 collides with other data on the communication bus 30, the communication device 10 executes an arbitration process of determining of which of the colliding pieces of data the transmission should be continued. The arbitration part 62 is a data part that is referred to when a data collision occurs to determine which piece of data should be prioritized. Data that should be prioritized is data the transmission of which is continued in the event of a collision between two pieces of data.

The data part 63 is a data part that is transmitted after the arbitration part 62 in the data. The data part 63 is a part that stores a message that the communication device 10 communicates to the other communication devices 10.

### Aspect of Transmission of Data by Communication Device 10

When transmitting data, the communication device 10 first checks whether another communication device 10 is transmitting data through the communication bus 30. When transmitting data toward the first bus 31, the first device 11, the second device 12, and the relay device 20 check whether another communication device 10 connected to the first bus 31 is transmitting data through the first bus 31. When transmitting data toward the second bus 32, the third device 13, the fourth device 14, the fifth device 15, and the relay device 20 check whether another communication device 10 connected to the second bus 32 is transmitting data through the second bus 32.

When the communication device 10 has checked that no other communication device 10 is transmitting data through the communication bus 30, the communication device 10 transmits data. When the communication device 10 has checked that another communication devices 10 is transmitting data through the communication bus 30, the communication device 10 stands by until the transmission of the data being transmitted ends. Thereafter, the communication device 10 checks again whether another communication device 10 is transmitting data through the communication bus 30, and transmits data when it has been checked that no other communication device 10 is transmitting data.

When a plurality of communication devices 10 transmits pieces of data at the same time, these pieces of data collide with one another. When a collision between pieces of data occurs, the communication devices 10 that have been transmitting these pieces of data execute the arbitration process. In the following, an aspect of the arbitration process will be described with reference to FIG. 3 to FIG. 6.

### Types of Arbitration Part 62

There are two types of arbitration parts 62: a standard arbitration part 62a and an extended arbitration part 62b. In the data shown in FIG. 2, the communication device 10 inserts either the standard arbitration part 62a or the extended arbitration part 62b into the data part of the arbitration part 62.

FIG. 3 shows a configuration of the standard arbitration part 62a. As shown in FIG. 3, the standard arbitration part 62a is composed of an ID 71 and an RTR 72. In FIG. 3, the constituent elements of the standard arbitration part 62a are transmitted to the communication bus 30 in the order shown from left to right.

The ID 71 is a data part that is transmitted first in the standard arbitration part 62a. The ID 71 is an identifier for identifying the contents of data and the communication device 10 that is transmitting the data. The RTR 72 is a data part that is transmitted after the ID 71 in the standard arbitration part 62a. "RTR" stands for "Remote Transmission Request". The RTR 72 is one-bit long and dominant. That is, the RTR 72 is a signal indicating 0.

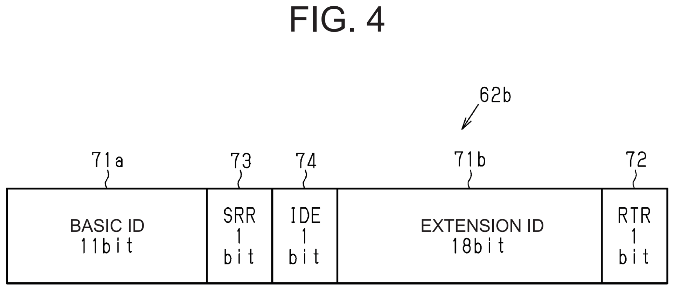

FIG. 4 shows a configuration of the extended arbitration part 62b. As shown in FIG. 4, the extended arbitration part 62b is composed of a basic ID 71a, an SRR 73, an IDE 74, an extension ID 71b, and an RTR 72. In FIG. 4, the constituent elements of the extended arbitration part 62b are transmitted to the communication bus 30 in the order shown from left to right.

The basic ID 71a is a data part that is transmitted first in the extended arbitration part 62b. The extended arbitration part 62b includes an identifier for identifying the contents of data and the communication device 10 that is transmitting the data. The basic ID 71a is a first half part of the identifier included in the extended arbitration part 62b.

The SRR 73 is a data part that is transmitted after the basic ID 71a in the extended arbitration part 62b. "SRR" stands for "Substitute Remote Request bit". The SRR 73 is one-bit long and recessive. That is, the SRR 73 is a signal indicating 1.

The IDE 74 is a data part that is transmitted after the SRR 73 in the extended arbitration part 62b. "IDE" stands for "Identifier Extension bit". The IDE 74 is one-bit long and recessive. That is, the IDE 74 is a signal indicating 1.

The extension ID 71b is a data part that is transmitted after the IDE 74 in the extended arbitration part 62b. The extension ID 71b is a latter half part of the identifier included in the extended arbitration part 62b. The RTR 72 is a data part that is transmitted after the extension ID 71b in the extended arbitration part 62b. The RTR 72 of the extended arbitration part 62b is one-bit long and dominant like that in the standard arbitration part 62a.

As described by showing FIG. 3, the standard arbitration part 62a has the ID 71 as the identifier. The identifier of the standard arbitration part 62a is formed in the first format. As shown in FIG. 3, the bit length of the ID 70 that is an identifier in the first format is 11 bits.

As described by showing FIG. 4, the identifier of the extended arbitration part 62b is composed of the basic ID 71a and the extension ID 71b. The identifier of the extended arbitration part 62b is formed in the second format. As shown in FIG. 4, the bit length of the basic ID 71a is 11 bits. As shown in FIG. 4, the bit length of the extension ID 71b is 18 bits. The bit length of the identifier in the second format is 29 bits as a total of the bit length of the basic ID 71a and the bit length of the extension ID 71b.

Thus, the standard arbitration part 62a and the extended arbitration part 62b are different from each other in the length of the bit length of the identifier belonging thereto. The identifier indicates a priority rank of the data in the arbitration process. In the arbitration process, data having an identifier with a lower value has a higher priority rank than data having an identifier with a higher value.

### Aspect of Arbitration Process

In the arbitration process, the communication device 10 determines the priority ranks of pieces of data by comparing the identifiers belonging to the arbitration parts 62.

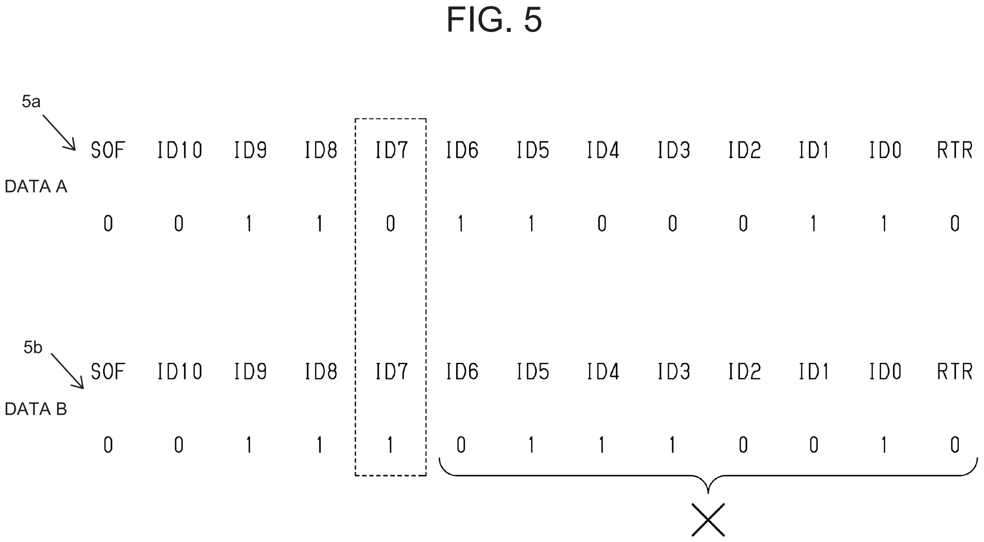

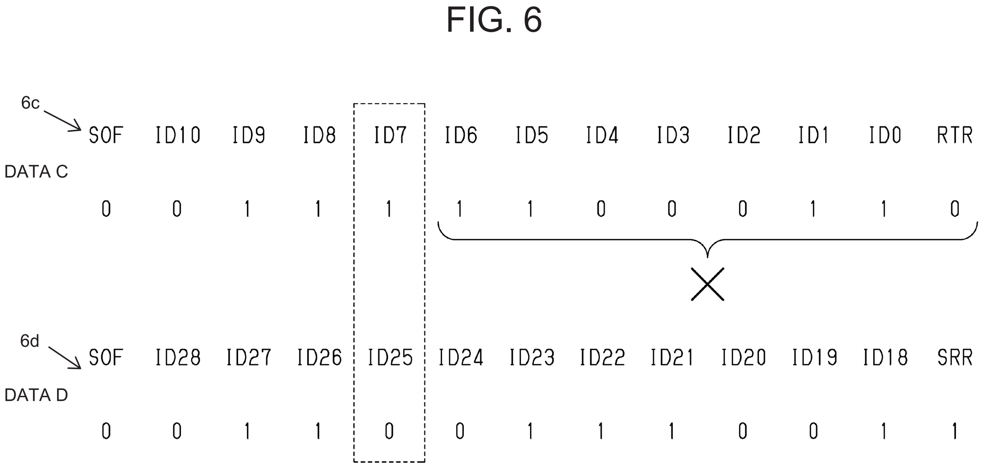

FIG. 5 and FIG. 6 each show two sets of signals composing pieces of data. In the following, an aspect in which the arbitration process is executed when two pieces of data collide with each other will be described by showing FIG. 5 and FIG. 6.

### When Pieces of Data Having Standard Arbitration Part 62a Collide with Each Other

In the following, by showing FIG. 5, an aspect will be described in which the communication device 10 executes the arbitration process when pieces of data having the standard arbitration part 62a collide with each other.

At the top of FIG. 5, signals 5a composing data A are shown. The data A has the standard arbitration part 62a as the arbitration part 62. In the signals 5a of FIG. 5, the part from ID10 to ID0 is signals composing the ID 71.

At the bottom of FIG. 5, signals 5b composing data B are shown. The data B has the standard arbitration part 62a as the arbitration part 62. In the signals 5b of FIG. 5, the part from ID10 to ID0 is signals composing the ID 71.

In the ID 71, ID10 is the most significant digit and ID0 is the least significant digit. In each of the sets of signals 5a and 5b shown in FIG. 5, the signals are transmitted to the communication bus 30 in the order shown from left to right. That is, when transmitting data having the standard arbitration part 62a, the communication device 10 transmits the SOF 61 and then transmits the ID 71 to the communication bus 30 in order from the most significant digit.

As shown in the signals 5a of FIG. 5, the ID 71 of the data A is "01101100011" as a binary number. As shown in the signals 5b of FIG. 5, the ID 71 of the data B is "01110111001" as a binary number. Thus, in FIG. 5, the identifier of the data A has a smaller value than the identifier of the data B.

In FIG. 5, the data A and the data B start to be transmitted at the same time and collide with each other on the communication bus 30. The communication device 10 can detect, while transmitting data, that the data it is transmitting (which may be referred to as "first data") has collided with other data (which may be referred to as "second data").

The timing when the communication device 10 detects a data collision depends on the capacity of the communication device 10. That is, the communication device 10 detects a data collision at the timing of transmitting a high-order-digit part of the identifier in some cases, and at the timing of transmitting a low-order-digit part of the identifier in other cases.

In the following, an aspect will be described in which, in the case of FIG. 5, the communication device 10 transmitting the data A and the communication device 10 transmitting the data B execute the arbitration process upon detecting a data collision at the timing when both communication devices 10 are transmitting ID10.

The communication device 10 monitors signals composing data transmitted through the communication bus 30 on a bit-by-bit basis. When there is one communication device 10 that has transmitted data to the communication bus 30, if the signal transmitted by that communication device 10 is dominant, the dominant signal flows through the communication bus 30. When there is one communication device 10 that has transmitted data to the communication bus 30, if the signal transmitted by that communication device 10 is recessive, the recessive signal flows through the communication bus 30.

In the case where a plurality of communication devices 10 has transmitted pieces of data to the communication bus 30 at the same time, if all the communication devices 10 that have transmitted these pieces of data have transmitted recessive signals, the recessive signals flow through the communication bus 30. On the other hand, in the case where a plurality of communication devices 10 has transmitted pieces of data to the communication bus 30 at the same time, if there is even one communication device 10 that has transmitted a dominant signal among the communication devices 10 that have transmitted these pieces of data, the dominant signal flows through the communication bus 30.

In FIG. 5, the communication device 10 having transmitted the data A and the communication device 10 having transmitted the data B execute the arbitration process after detecting a data collision. In the arbitration process, the communication device 10 compares the signal it has transmitted and the signal flowing through the communication bus 30. If a dominant signal flows through the communication bus 30 when the communication device 10 has transmitted a recessive signal, the communication device 10 determines that it has lost in the arbitration. Losing in the arbitration is a state where the data that the communication device 10 is transmitting has a lower degree of priority than the other colliding data.

In FIG. 5, the communication device 10 having transmitted the data B detects a collision with other data at the point of having transmitted the signal ID10. Then, the communication device 10 compares the signal of the data B it is transmitting and the signal flowing through the communication bus 30.

In FIG. 5, the data A and the data B share the same signals from ID10 to ID8. In FIG. 5, the signal ID7 of the data A is dominant and the signal ID7 of the data B is recessive. In FIG. 5, therefore, the dominant signal flows through the communication bus 30 at the point when the communication device 10 having transmitted the data B has transmitted the signal ID7.

The communication device 10 having transmitted the data B determines that it has lost in the arbitration at the point of having transmitted the signal ID7. As shown in the data B of FIG. 5, the communication device 10 that has determined that it has lost in the arbitration cancels the subsequent data transmission.

On the other hand, In FIG. 5, the communication device 10 having transmitted the data A detects a collision with other data at the point of having transmitted the signal ID10. Then, the communication device 10 compares the signal of the data B it is transmitting and the signal flowing through the communication bus 30.

For the communication device 10 having transmitted the data A, the signal it has transmitted and the signal flowing through the communication bus 30 match at the point of transmitting the signals ID10 to ID7. As the communication device 10 having transmitted the data B cancels the transmission of the part of the data from ID6 onward, the communication device 10 having transmitted the data A can transmit the part of the data from ID6 onward without colliding with other data.

In FIG. 5, the communication device 10 having transmitted the data A wins in the arbitration. Winning in the arbitration is a state where the data that the communication device 10 is transmitting has a higher degree of priority than the other colliding data.

Thus, in the arbitration process, the communication device 10 compares the identifiers belonging to the colliding pieces of data in order from the high-order digits. In the comparison of the identifiers, when the signal indicating one identifier is 0 and the signal indicating the other identifier is 1, the communication device 10 having transmitted the signal of 1 stops the data transmission. Therefore, the communication device 10 that is transmitting data having an identifier with a lower value can continue the data transmission. In this way, the communication device 10 can prioritize the transmission of data with a higher priority rank in the communication bus 30.

The communication device 10 that has lost in the arbitration in the arbitration process waits for completion of the data transmission by the communication device 10 that has won in the arbitration, and then transmits the data again when it has been checked that no data is being transmitted through the communication bus 30.

In FIG. 5, the aspect of the arbitration process has been described by showing the case where pieces of data having the standard arbitration part 62a have collided with each other. Also, when pieces of data having the extended arbitration part 62b have collided with each other, the communication device 10 can prioritize the transmission of data having an identifier with a smaller value by executing the arbitration process in the same manner as in FIG. 5.

### When Pieces of Data Having Identifiers in Different Formats Have Collided with Each Other

As has been described by showing FIG. 5, in the arbitration process, data having an identifier with a lower value is supposed to be prioritized. On the other hand, if the arbitration process is executed in the same aspect as in FIG. 5 when data having the standard arbitration part 62a and data having the extended arbitration part 62b collide with each other, the magnitudes of the values of the identifiers cannot be appropriately compared due to the signals being compared in order from the high-order digits of the identifiers.

In the following, by showing FIG. 6, a case will be described as a comparative example in which the arbitration process is executed in the same aspect as in FIG. 5 when data having the standard arbitration part 62a and data having the extended arbitration part 62b have collided with each other. In the description of the comparative example, a device that executes the arbitration process will be referred to simply as a "device."

At the top of FIG. 6, signals 6c composing data C are shown. The data C has the standard arbitration part 62a as the arbitration part 62. In the signals 6c of FIG. 6, the part from ID10 to ID0 is signals composing the ID 71.

At the bottom of FIG. 6, signals 6d composing data D are shown. The data D has the extended arbitration part 62b as the arbitration part 62. In the signals 6d of FIG. 6, the part from ID28 to ID18 is signals composing the basic ID 71a.

In the basic ID 71a, ID28 is the most significant digit and ID18 is the least significant digit. In each of the sets of signals 6c and signals 6d shown in FIG. 6, the signals are transmitted to the communication bus 30 in the order shown from left to right. That is, when transmitting data having the extended arbitration part 62b, the communication device 10 transmits the SOF 61 and then transmits the basic ID 71a to the communication bus 30 in order from the most significant digit.

If the device executes the arbitration process in the same aspect as in FIG. 5 when the data C and the data D collide with each other, the device compares the ID 71 of the data C and the basic ID 71a of the data D in order from the high-order digits. As shown in the signals 6c of FIG. 6, the ID 71 of the data C is "01111100011" as a binary number. As shown in the signals 6d of FIG. 6, the basic ID 71a of the data D is "01100111001" as a binary number. Thus, when the ID 71 of the data C and the basic ID 71a of the data D are compared, the basic ID 71a of the data D has a smaller value.

In FIG. 6, the device having transmitted the data C determines that it has lost in the arbitration at the point when the device having transmitted the data C has transmitted the signal ID7 and the device having transmitted the data D has transmitted the signal ID25. Then, the device having transmitted the data C does not transmit the part of the data C from ID6 onward. In the comparative example shown in FIG. 6, the device having transmitted the data D wins in the arbitration.

Thus, if the arbitration process is executed in the aspect shown in FIG. 5 when data having the standard arbitration part 62a and data having the extended arbitration part 62b collide with each other, the ID 71 and the basic ID 71a are compared. Then, transmission of the data including one of the ID 71 and the basic ID 71a that has a smaller value is prioritized.

When the values indicated by the ID 71 and the basic ID 71a are the same, the data having the standard arbitration part 62a is prioritized, as the RTR 72 transmitted subsequently to the ID 71 is dominant and the SRR 73 transmitted subsequently to the basic ID 71a is recessive.

The identifier in the first format originally indicates the priority rank among identifiers in the first format. The identifier in the second format originally indicates the priority rank among identifiers in the second format. That is, it is originally not assumed that an identifier in the first format and an identifier in the second format are transmitted in a mixed manner. Therefore, if the arbitration process is executed in the aspect shown in FIG. 6 when an identifier in the first format and an identifier in the second format have been transmitted in a mixed manner, the magnitudes of the values of the identifiers cannot be appropriately compared. As a result, the arbitration may yield an unexpected result.

### Types of Identifiers Transmitted by Communication Devices 10

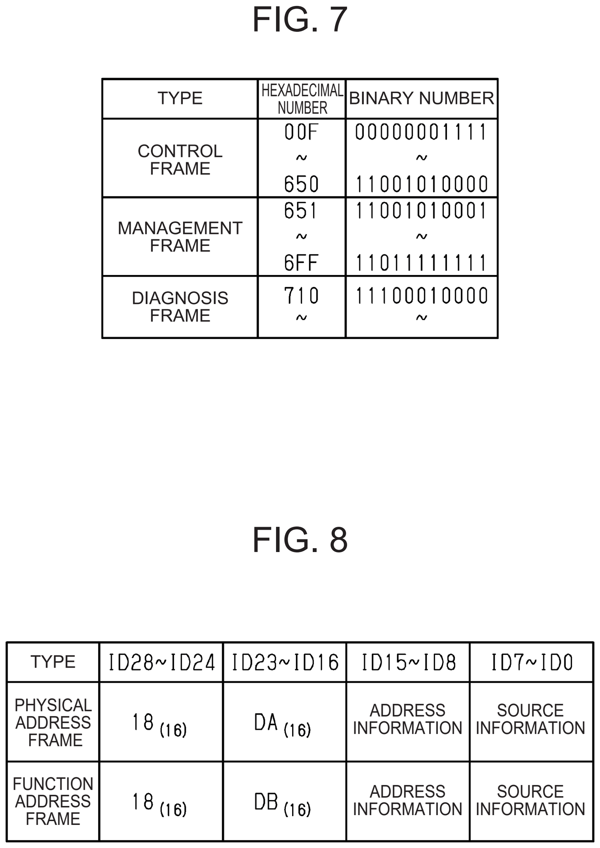

FIG. 7 and FIG. 8 show identifiers included in pieces of data transmitted by the communication devices 10. In the following, types of identifiers transmitted by the communication devices 10 will be described.

### Identifiers in First Format

FIG. 7 shows the contents of the ID 71 that is an identifier included in the standard arbitration part 62a among identifiers transmitted by the communication devices 10. That is, FIG. 7 shows the contents of identifiers in the first format among identifiers transmitted by the communication devices 10.

The communication program PC causes the processing circuit 16 and the processing circuit 21 to execute various processes that the communication device 10 executes when transmitting data. As shown in FIG. 7, the processing circuit 16 and the processing circuit 21 form a control frame, a management frame, and a diagnostic frame in the first format.

The control frame is an identifier indicating that the data is data transmitted for control of the vehicle 50. For example, the communication device 10 transmits the control frame as an identifier by including it in data that the communication device 10 transmits for control of an engine included in the vehicle 50.

As shown in FIG. 7, the control frame is represented by a number within a range of "00F" to "650" as a hexadecimal number. The management frame is an identifier indicating that the data is data transmitted for managing a communication state in the communication bus 30. In the communication network system 40, for example, the communication device 10 transmits the management frame as an identifier by including it in data indicating that the communication device 10 is in a communicable state.

As shown in FIG. 7, the management frame is represented by a number within a range of "651" to "6FF" as a hexadecimal number. The diagnostic frame is an identifier indicating that the data is data transmitted for failure diagnosis in the vehicle 50. For example, the communication device 10 transmits the diagnostic frame as an identifier by including it in data indicating a log of communication errors at the time of inspection using a diagnostic device at a dealership.

As shown in FIG. 7, the diagnostic frame is represented by a number within a range from "710" onward as a hexadecimal number. As described above, an identifier having a smaller value has a higher priority rank. For identifiers in the first format, the priority rank is set in the order of the control frame, the management frame, and the diagnostic frame from the higher side.

In FIG. 7, sequences of numbers representing the respective identifiers as binary numbers are described. In each binary number shown in FIG. 7, the first to third digits correspond to the first digit of the hexadecimal number. In each binary number shown in FIG. 7, the fourth to seventh digits correspond to the second digit of the hexadecimal number. In each binary number shown in FIG. 7, the eighth to eleventh digits correspond to the third digit of the hexadecimal number.

As shown in FIG. 7, the control frame is represented by a number within a range of "00000001111" to "11001010000" as a binary number. As shown in FIG. 7, the management frame is represented by a number within a range of "11001010001" to "11011111111" as a binary number.

As shown in FIG. 7, the diagnostic frame is represented by a number within a range from "11100010000" onward as a binary number. Each binary number shown in FIG. 7 has 11 digits. The communication devices 10 transmit information indicating the binary numbers shown in FIG. 7 to the communication bus 30 using 11-bit signals in the first format.

### Identifiers in Second Format

FIG. 8 shows the contents of identifiers included in the extended arbitration part 62b among identifiers transmitted by the communication devices 10. That is, FIG. 8 shows the contents of the identifiers in the second format among identifiers transmitted by the communication devices 10.

The identifiers shown in FIG. 8 each indicate a diagnostic frame. The processing circuit 16 and the processing circuit 21 of the communication device 10 form a diagnostic frame in the first format as shown in FIG. 7. In addition to that, the processing circuit 16 and the processing circuit 21 of the communication device 10 sometimes form a diagnostic frame in the second format.

As shown in FIG. 8, there are two types of diagnostic frames formed in the second format: a physical address frame and a function address frame. The physical address frame is an identifier that is one of diagnostic frames formed in the second format and is attached to data transmitted toward one communication device 10 in the communication network system 40. The function address frame is an identifier that is one of diagnostic frames formed in the second format and is attached to data transmitted toward a plurality of communication devices 10 in the communication network system 40.

FIG. 8 shows information that is input into the basic ID 71a and the extension ID 71b in the diagnostic frame formed in the second format. The communication devices 10 transmit the information shown in FIG. 8 as represented by binary numbers to the communication bus 30 using 29-bit signals in the second format.

In FIG. 8, ID28 to ID24 represent the first five digits in the identifier in the second format. In the physical address frame and the function address frame, the communication device 10 inputs information indicating "18" as a hexadecimal number into ID28 to ID24 as a binary number.

In FIG. 8, ID23 to ID16 represent the sixth to 13th digits in the identifier in the second format. In the physical address frame, the communication device 10 inputs information indicating "DA" as a hexadecimal number into ID23 to ID16 as a binary number. In the function address frame, the communication device 10 inputs information indicating "DB" as a hexadecimal number into ID23 to ID16 as a binary number.

In FIG. 8, ID15 to ID8 represent the 14th to 21st digits in the identifier in the second format. In the physical address frame and the function address frame, the communication device 10 inputs address information into ID15 to ID8 as a binary number. The address information is information indicating an address of data transmitted.

In FIG. 8, ID7 to ID0 represent the 22nd to 29th digits in the identifier in the second format. In the physical address frame and the function address frame, the communication device 10 inputs source information into ID7 to ID0 as a binary number. The source information is information indicating the source of data transmitted.

Thus, in the physical address frame and the function address frame, information that is input within the range of ID28 to ID16 is fixed. On the other hand, in the physical address frame and the function address frame, information that is input in the range of ID 15 to ID0 differs from one data to another.

In the second format, the signals ID28 to ID18 are input into the basic ID 71a. In the second format, the signals ID17 to ID0 are input into the extension ID 71b.

### Priority Rank of Identifier

As described earlier, if the arbitration process is executed in the same aspect as in FIG. 5 when data having the standard arbitration part 62a and data having the extended arbitration part 62b collide with each other, the magnitudes of the values of the identifiers cannot be appropriately compared.

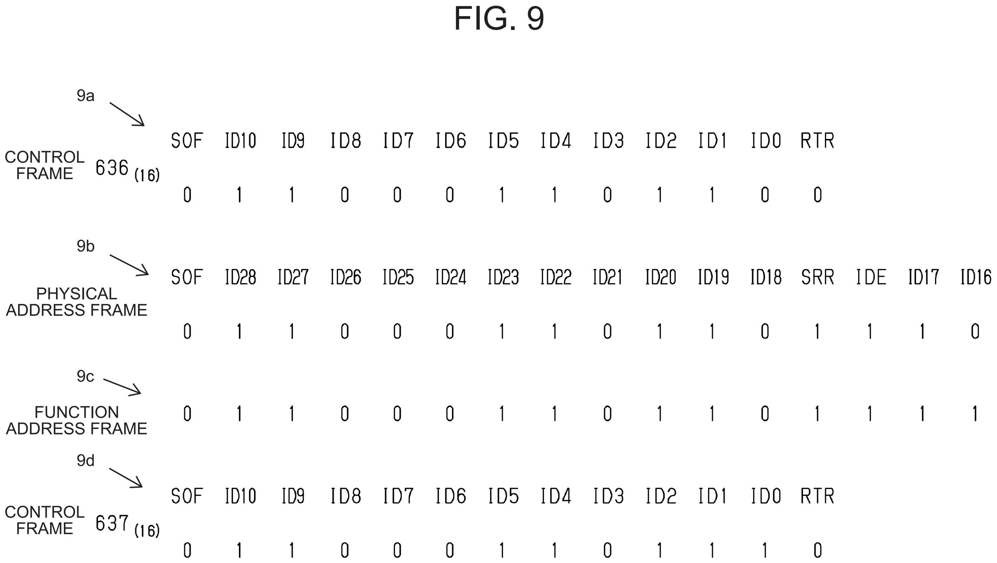

FIG. 9 shows signals 9a to 9d composing pieces of data. In FIG. 9, a total of four sets of signals are arrayed, with two sets of signals representing identifiers formed in the first format and the other two sets of signals representing identifiers formed in the second format.

In the signals 9a of FIG. 9, a control frame indicating "636" as a hexadecimal number that is signals indicating an identifier formed in the first format is represented by a binary number. In the signals 9b, the part from ID 28 to ID16 in the physical address frame that is signals indicating an identifier formed in the second format is represented by a binary number. In the signals 9c, the part from ID28 to ID16 in the function address frame that is signals indicating an identifier formed in the second format is represented by a binary number. In the signals 9d, a control frame indicating "637" as a hexadecimal number that is signals indicating an identifier formed in the first format is represented by a binary number.

When the signals 9a and the signals 9b of FIG. 9 are compared, the part from ID10 to ID0 in the signals 9a and the part from ID28 to ID18 in the signals 9b are the same signals. That is, the ID 71 in the control frame indicating "636" as a hexadecimal number and the basic ID 71a in the physical address frame have the same value. As described earlier, when the values indicated by the ID 71 and the basic ID 71a are the same, data having the standard arbitration part 62a is prioritized, as the RTR 72 transmitted subsequently to the ID 71 is dominant and the SRR 73 transmitted subsequently to the basic ID 71a is recessive. That is, if the arbitration process is executed in the same aspect as in FIG. 5 when data including a control frame indicating "636" as a hexadecimal number and data including a physical address frame collide with each other, the communication device 10 having transmitted the former data wins in the arbitration.

When the signals 9b and the signals 9c of FIG. 9 are compared, the part from ID28 to ID17 in the signals 9b and the part from ID28 to ID17 in the signals 9c are the same signals. In the signals 9b, ID16 is dominant, whereas in the signals 9c, ID16 is recessive. Therefore, if the arbitration process is executed in the same aspect as in FIG. 5 when data including the physical address frame and data including the function address frame collide with each other, the communication device 10 having transmitted the former data wins in the arbitration.

When the signals 9c and the signals 9d of FIG. 9 are compared, the part from ID28 to ID19 in the signals 9c and the part from ID10 to ID1 in the signals 9d are the same signals. In the signals 9c, ID18 is dominant, whereas in the signals 9d, ID0 is recessive. Therefore, if the arbitration process is executed in the same aspect as in FIG. 5 when data including a function address frame and data including a control frame indicating "637" as a hexadecimal number collide with each other, the communication device 10 having transmitted the former data wins in the arbitration.

Thus, in the case where the communication device 10 has transmitted data including an identifier in the second format, if the arbitration process is executed in the same aspect as in FIG. 5 when that data collides with data including a control frame represented by a number within a range of "00F" to "636" as a hexadecimal number, the communication device 10 loses in the arbitration.

On the other hand, in the case where the communication device 10 has transmitted data including an identifier in the second format, if the arbitration process is executed in the same aspect as in FIG. 5 when that data collides with data including an identifier in the first format represented by a number within a range from "637" onward as a hexadecimal number, the communication device 10 wins in the arbitration. Identifiers represented by numbers within a range from "637" onward as hexadecimal numbers are control frames represented by numbers within a range of "637" to "650," all management frames, and all diagnostic frames formed in the first format.

When data including an identifier formed in the first format and data including an identifier formed in the second format collide with each other, the communication device 10 executes such a process that the data including the identifier formed in the second format is not prioritized.

### Processing Executed When Data Including Identifier in First Format is Transmitted

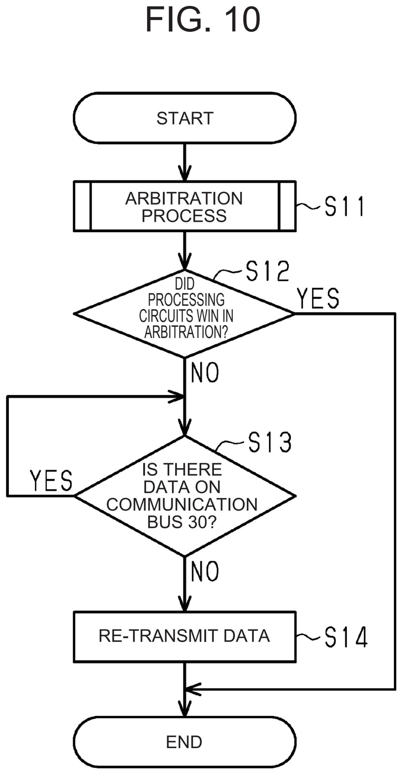

FIG. 10 shows a flow of a sequence of processing executed by the communication device 10 upon detecting a data collision while transmitting data including an identifier formed in the first format. When the communication device 10 detects a data collision while transmitting data including one of the identifiers shown in FIG. 7, the communication device 10 executes the sequence of processing shown in FIG. 10. Hereinafter, "S" means a step.

The first device 11 to the fifth device 15 execute the sequence of processing shown in FIG. 10 upon detecting a data collision while transmitting data including an identifier formed in the first format. The relay device 20 executes the sequence of processing shown in FIG. 10 upon detecting a data collision while, after receiving data including an identifier formed in the first format from one communication network 45, relaying that data toward the other communication network 45.

When a data collision is detected while data including an identifier formed in the first format is being transmitted, the communication program PC causes the processing circuit 16 and the processing circuit 21 to execute the sequence of processing shown in FIG. 10.

While transmitting data, the processing circuit 16 and the processing circuit 21 are determining whether the data they are transmitting has collided with other data on the communication bus 30. As described by showing FIG. 5, while transmitting data, the communication device 10 can detect that the data it is transmitting has collided with other data.

When the sequence of processing shown in FIG. 10 is started, the processing circuit 16 and the processing circuit 21 execute the arbitration process in the processing of S11. In this case, the processing circuit 16 and the processing circuit 21 execute the arbitration process in the aspect as shown in FIG. 5.

Thereafter, the processing circuit 16 and the processing circuit 21 move the processing to S12. In the processing of S12, the processing circuit 16 and the processing circuit 21 determine whether they have won in the arbitration as a result of the arbitration process.

The processing circuit 16 and the processing circuit 21 determine that they have won in the arbitration when the data transmission has been completed without their stopping the data transmission in the arbitration process of S11. When the processing circuit 16 and the processing circuit 21 determine that they have won in the arbitration in the processing of S12 (S12: YES), they end the sequence of processing shown in FIG. 10.

The processing circuit 16 and the processing circuit 21 determine that they have not won in the arbitration, when they have determined that they have lost in the arbitration and stopped the data transmission in the arbitration process of S11. When the processing circuit 16 and the processing circuit 21 determine that they have not won in the arbitration in the processing of S12 (S12: NO), they move the processing to S13.

In the processing of S13, the processing circuit 16 and the processing circuit 21 determine whether there is any data being transmitted through the communication bus 30. When the processing circuit 16 and the processing circuit 21 determine that there is data being transmitted through the communication bus 30 (S13: YES), the processing circuit 16 and the processing circuit 21 execute the processing of S13 again. That is, the processing circuit 16 and the processing circuit 21 execute the processing of S13 until determining that there is no data being transmitted through the communication bus 30.

When the processing circuit 16 and the processing circuit 21 determine that there is no data being transmitted through the communication bus 30 (S13: NO), they move the processing to S14. In the processing of S14, the processing circuit 16 and the processing circuit 21 re-transmit the data that have failed to be transmitted due to losing in the arbitration in S11. Thereafter, the processing circuit 16 and the processing circuit 21 end the current sequence of processing.

### Processing Executed When Data Including Identifier in Second Format is Transmitted

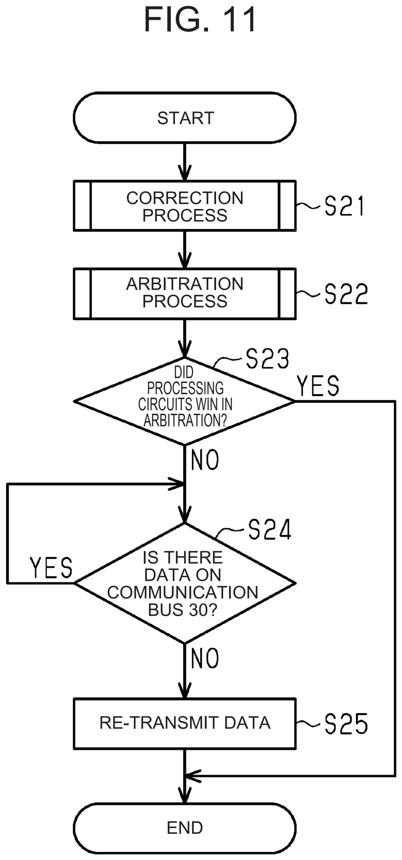

FIG. 11 shows a flow of a sequence of processing that the communication device 10 executes upon detecting a data collision while transmitting data including an identifier formed in the second format. The communication device 10 executes the sequence of processing shown in FIG. 11 upon detecting a data collision while transmitting data including an identifier shown in FIG. 8. Hereinafter, "S" means a step.

The first device 11 to the fifth device 15 execute the sequence of processing shown in FIG. 11 upon detecting a data collision while transmitting data including an identifier formed in the second format. The relay device 20 executes the sequence of processing shown in FIG. 11 upon detecting a data collision while, after receiving data including an identifier formed in the second format from one communication network 45, relaying that data toward the other communication network 45.

When a data collision is detected while data including an identifier formed in the second format is being transmitted, the communication program PC causes the processing circuit 16 and the processing circuit 21 to execute the sequence of processing shown in FIG. 11.

When the sequence of processing shown in FIG. 11 is started, the processing circuit 16 and the processing circuit 21 execute a correction process in S21. The correction process is a process of correcting the identifier of the data that the processing circuit 16 and the processing circuit 21 are transmitting such that the data they are transmitting is not prioritized over the other colliding data.

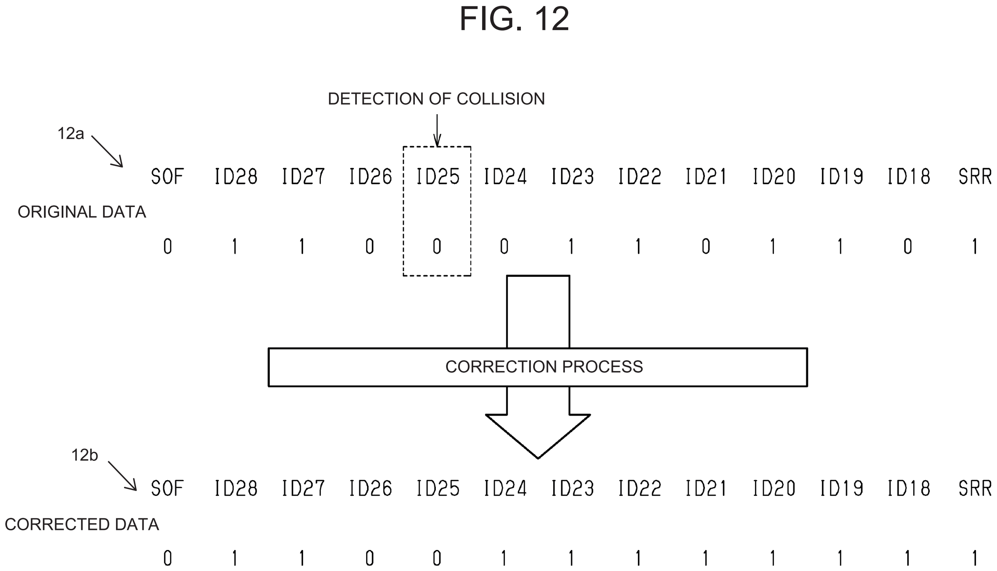

FIG. 12 is a view showing an aspect of execution of the correction process by the communication device 10. The signals shown at the top of FIG. 12 are one example of signals 12a in the original data before correction that was being transmitted when the processing circuit 16 or the processing circuit 21 did not execute the correction process. In the signals 12a of FIG. 12, the processing circuit 16 or the processing circuit 21 is transmitting an identifier indicating "11000110110" as the basic ID 71a in the original data.

As described earlier, the timing when the communication device 10 detects a data collision depends on the capacity of the communication device 10. In FIG. 12, the processing circuit 16 or the processing circuit 21 determines that the data it is transmitting has collided on the communication bus 30 at the point of transmitting the signal of ID25 in the basic ID 71a.

The signals 12b shown at the bottom of FIG. 12 are data after correction that the processing circuit 16 or the processing circuit 21 has output as a result of executing the correction process. After detecting a data collision, the processing circuit 16 and the processing circuit 21 correct the next and subsequent signals to be transmitted.

As shown in the signals 12b of FIG. 12, in the data after the correction, the signal of ID24 and the subsequent signals in the basic ID 71a have all turned into recessive. After detecting a data collision, the processing circuit 16 or the processing circuit 21 uniformly changes the next and subsequent signals to be transmitted into recessive, regardless of whether the original signal has been dominant or recessive. After detecting a data collision, the processing circuit 16 or the processing circuit 21 may search the next and subsequent signals to be transmitted for a portion where the signal is dominant and turn only that portion into recessive.

In the correction process, the processing circuit 16 and the processing circuit 21 correct the basic ID 71a in the identifier and do not correct the extension ID 71b. Thus, by executing the correction process, the processing circuit 16 and the processing circuit 21 transmit recessive signals as all the signals in the basic ID 71a that are transmitted on and after the point when the collision is detected.

Thereafter, the processing circuit 16 and the processing circuit 21 execute the processing of S22. In this case, the processing circuit 16 and the processing circuit 21 execute the arbitration process in the aspect as shown in FIG. 5.
When the identifier formed in the first format collides with the corrected portion in the identifier formed in the second format, the communication device 10 having transmitted the latter loses in the arbitration.

Unless all the colliding portions in the identifier in the first format are recessive, the communication device 10 transmitting the identifier in the second format determines that it has lost in the arbitration and stops the data transmission at the point of transmitting the basic ID 71a.

When all the colliding portions in the identifier in the first format are recessive, the identifier in the second format collides with the RTR 72 in the identifier in the first format at the point when the signal of the SRR 73 has been transmitted. Also in this case, therefore, the communication device 10 having transmitted the identifier in the second format determines that it has lost in the arbitration and stops the data transmission.

When pieces of data having an identifier in the second format collide with each other, the communication device 10 performs the arbitration process by comparing the extension IDs 71b. Then, the processing circuit 16 and the processing circuit 21 move the processing to S23. In the processing of S23, the processing circuit 16 and the processing circuit 21 determine whether they have won in the arbitration as a result of the arbitration process.

In FIG. 11, it is possible that when pieces of data each having an identifier in the second format collide with each other, the processing circuit 16 and the processing circuit 21 may win in the arbitration. The processing circuit 16 and the processing circuit 21 determine that they have won in the arbitration, when the data transmission has been completed without their stopping the data transmission in the arbitration process in S22. When the processing circuit 16 and the processing circuit 21 determine that they have won in the arbitration in the processing of S23 (S23: YES), they end the sequence of processing shown in FIG. 11.

The processing circuit 16 and the processing circuit 21 determine that they have not won in the arbitration, when they determine that they have lost in the arbitration and stopped the data transmission in the arbitration process of S22. When the processing circuit 16 and the processing circuit 21 determine that they have not won in the arbitration in the processing of S23 (S23: NO), the processing circuit 16 and the processing circuit 21 move the processing to S24.

In the processing of S24, the processing circuit 16 and the processing circuit 21 determine whether there is any data being transmitted through the communication bus 30. When the processing circuit 16 and the processing circuit 21 determine that there is data being transmitted through the communication bus 30 (S24: YES), the processing circuit 16 and the processing circuit 21 execute the processing of S24 again. That is, the processing circuit 16 and the processing circuit 21 execute the processing of S24 until determining that there is no data being transmitted through the communication bus 30.

When the processing circuit 16 and the processing circuit 21 determine that there is no data being transmitted through the communication bus 30 (S24: NO), the processing circuit 16 and the processing circuit 21 move the processing to S25. In the processing of S25, the processing circuit 16 and the processing circuit 21 re-transmit the data that has failed to be transmitted due to losing in the arbitration in S22. Then, the processing circuit 16 and the processing circuit 21 end the current sequence of processing.

Thus, upon detecting a data collision, the communication device 10 that is transmitting data including an identifier formed in the second format corrects the data it is transmitting such that the data it is transmitting has a lower priority rank than the other colliding data. By executing the arbitration process after executing the correction process in the event of a data collision, the communication device 10 transmitting data including an identifier formed in the second format precludes the data it is transmitting from being prioritized. Therefore, when data including an identifier formed in the first format and data including an identifier formed in the second format collide with each other, the communication device 10 that has transmitted the former can continue the transmission in the arbitration process.

### Workings of Embodiment

When the communication device 10 transmits data including an identifier formed in the second format and the transmitted data collides with other data, the communication device 10 corrects the identifier such that the data it has transmitted is not prioritized in the arbitration process. Thus, in the communication network system 40 composed of the communication devices 10, data including an identifier formed in the first format is prioritized over data including an identifier formed in the second format.

### Advantages of Embodiment

Even when there is a plurality of types of identifiers included in pieces of data transmitted in the communication network system 40, the arbitration result is consistent with the predetermined order according to the type of identifier. Therefore, the communication device 10 can reduce the likelihood of an incident where data that is supposed to be prioritized fails to be prioritized.

The bit length of the identifier in the first format is shorter than the bit length of the identifier in the second format. The bit length of the identifier in the first format is 11 bits. The bit length of the identifier in the second format is 29 bits.

When the communication device 10 transmits data including an identifier formed in the format with a bit length of 29 bits and the transmitted data collides with other data, the communication device 10 executes the correction process. Thus, the communication device 10 can reduce the likelihood of an incident where, in the arbitration process, data including an identifier with a bit length of 29 bits is determined to have a higher priority rank than data including an identifier with a bit length of 11 bits.

The communication device 10 is installed in the vehicle 50. The processing circuit 16 and the processing circuit 21 form, in the first format, a control frame that is an identifier indicating that the data is data transmitted for control of the vehicle 50. The processing circuit 16 and the processing circuit 21 form, in the second format, a diagnostic frame that is an identifier indicating that the data is data transmitted for failure diagnosis of the vehicle 50.

The types of identifiers included in data transmitted by the communication devices 10 include a control frame and a diagnostic frame. The communication device 10 executes the correction process when data including a diagnostic frame it has transmitted collides with other data in the communication network system 40. Thus, in the communication network system 40, the communication device 10 can prioritize the transmission of data including a control frame over data including a diagnostic frame.

The processing circuit 16 and the processing circuit 21 form, in the first format, a management frame that is an identifier indicating that the data is data transmitted to manage the communication state in the communication network system 40.

The types of identifiers included in pieces of data transmitted by the communication devices 10 include the management frame in addition to the control frame and the diagnostic frame. The communication device 10 executes the correction process when data including a diagnostic frame it has transmitted collides with other data in the communication network system 40. Thus, in the communication network system 40, the communication device 10 can prioritize transmission of data including a management frame over data including a diagnostic frame.

The communication devices 10 compose the communication network 45. The communication network system 40 includes a plurality of communication networks 45. The communication network system 40 includes the relay device 20 that relays data exchanged among the communication networks 45.

Among the communication devices 10, the relay device 20 that transmits data transmitted in one communication network 45 toward the other communication network 45 tends to transmit data more frequently than the other communication devices 10. Since the relay device 20 relays data transmitted from a plurality of communication devices 10, the relay device 20 is highly likely to transmit data including various types of identifiers. Accordingly, an incident where data that is supposed to be prioritized fails to be prioritized is likely to occur when the relay device 20 relays data exchanged between the communication networks 45.

When the relay device 20 among the communication devices 10 transmits data including an identifier formed in the second format and the transmitted data collides with other data, the relay device 20 corrects the identifier such that the transmission of that data is not prioritized in the arbitration process. Thus, in the communication network system 40 composed of a plurality of communication networks 45, data including an identifier formed in the first format is prioritized over data including an identifier formed in the second format.

Therefore, even when there is a plurality of types of identifiers included in pieces of data transmitted in the communication network system 40 composed of a plurality of communication networks 45, the arbitration result is consistent with the predetermined order according to the type of identifier. Accordingly, the communication device 10 can reduce the likelihood of an incident where data that is supposed to be prioritized fails to be prioritized.

In the vehicle 50, when the communication device 10 transmits data including an identifier formed in the second format and the transmitted data collides with other data, the communication device 10 corrects the identifier such that the data it has transmitted is not prioritized in the arbitration process. Thus, in the communication network system 40 included in the vehicle 50, data including an identifier formed in the first format is prioritized over data including an identifier formed in the second format.

Therefore, even when there is a plurality of types of identifiers included in pieces of data transmitted in the communication network system 40, the arbitration result is consistent with a predetermined order according to the type of identifier. Accordingly, the vehicle 50 can reduce the likelihood of an incident where data that is supposed to be prioritized fails to be prioritized.

The vehicle 50 includes the communication device 10. In the communication device 10, the bit length of an identifier in the first format is shorter than the bit length of an identifier in the second format. The vehicle 50 includes the communication device 10. In the communication device 10, the bit length of an identifier in the first format is 11 bits. In the communication device 10, the bit length of an identifier in the second format is 29 bits.

In the vehicle 50, when the communication device 10 transmits data including an identifier formed in the format with a bit length of 29 bits and the transmitted data collides with other data, the communication device 10 executes the correction process. Thus, the vehicle 50 can reduce the likelihood of an incident where, in the arbitration process, data including an identifier with a bit length of 29 bits is determined to have a higher priority rank than data including an identifier with a bit length of 11 bits.

A communication method is a communication method in the communication network system 40. The communication network system 40 is composed of a plurality of communication devices 10, with the communication devices 10 exchanging pieces of data each including an identifier through communication based on a CAN protocol. In the communication network system 40, the identifier indicates a priority rank of data and is in a format that is either the first format or the second format different from the first format. The communication network system 40 is configured such that when transmitted pieces of data collide with each other, each of the communication devices 10 transmitting these pieces of data executes the arbitration process. In the arbitration process, each of the communication devices 10 transmitting the pieces of data compares the identifier included in the data it is transmitting and the identifier included in the other colliding data. In the arbitration process, each of the communication devices 10 transmitting the pieces of data continues the data transmission when the data it is transmitting has a higher priority rank, and stops the data transmission when the data it is transmitting has a lower priority rank. The communication method includes a step (S21, S22) in which, when the communication device 10 transmits data including an identifier formed in the second format and that data collides with data transmitted by another communication device 10, the communication device 10 executes the arbitration process while executing the correction process of correcting the identifier included in the data it is transmitting such that the data it is transmitting has a lower priority rank than the other colliding data. The communication method includes a step (S11) in which, when the communication device 10 transmits data including an identifier formed in the first format and that data collides with data transmitted by another communication device, the communication device 10 executes the arbitration process without executing the correction process.

In the communication method, when the communication device 10 transmits data including an identifier formed in the second format and the transmitted data collides with other data, the communication device 10 corrects the identifier such that the data it has transmitted is not prioritized. Thus, in the communication network system 40 composed of the communication devices 10 adopting this communication method, data including an identifier formed in the first format is prioritized over data including an identifier formed in the second format.

Therefore, even when there is a plurality of types of identifiers included in pieces of data transmitted in the communication network system 40, the arbitration result is consistent with the predetermined order according to the type of identifier. Accordingly, this communication method can reduce the likelihood of an incident where data that is supposed to be prioritized fails to be prioritized.

When the communication device 10 transmits data including an identifier formed in the second format and the transmitted data collides with other data, the communication program PC corrects the identifier such that the data that the communication device 10 has transmitted is not prioritized in the arbitration process. Thus, in the communication network system 40 composed of the communication devices 10 storing the communication program PC, data including an identifier formed in the first format is prioritized over data including an identifier formed in the second format.

Therefore, even when there is a plurality of types of identifiers included in data transmitted in the communication network system 40, the arbitration result is consistent with the predetermined order according to the type of identifier. Accordingly, the communication program PC can reduce the likelihood of an incident where data that is supposed to be prioritized fails to be prioritized.

In the above-described embodiment, the communication program PC is stored in the storage device 17 and the storage device 22. The communication program PC may be provided in a state of being recorded in a recording medium. Examples of recording media in which the communication program PC is recorded include memories, such as a USB memory, an SSD, and an SD card, and a CD-ROM, an optical disc, etc.

### Modified Examples

The above-described embodiment can be implemented with changes made thereto as follows. The above-described embodiment and the following modified examples can be implemented in combination within such a range that no technical contradiction arises.

The bit length of an identifier in the first format may be the same length as the bit length of an identifier in the second format. The bit length of an identifier in the first format may be longer than the bit length of an identifier in the second format.

The bit length of the identifier in the first format need not be 11 bits. The bit length of the identifier in the second format need not be 29 bits. The communication device 10 need not be installed in the vehicle 50.

The types of identifiers are not limited to the aspect shown in FIG. 7 and FIG. 8. The communication device 10 need not form a control frame in the first format. The communication device 10 need not form a management frame in the first format. The communication device 10 need not form a diagnostic frame in the first format. The communication device 10 need not form a diagnostic frame in the second format.

The communication network system 40 need not include a plurality of communication networks 45. In this case, the communication network system 40 need not include the relay device 20 as the communication device 10.

### Supplement

The technical ideas that can be grasped from the above-described embodiment and modified examples will be described below.

### Supplement 1

A communication device in a communication network system which includes a plurality of communication devices and in which the communication devices exchange pieces of data each including an identifier through communication based on a CAN protocol, the identifier indicating a priority rank of data and being in a format of either a first format or a second format different from the first format, the communication network system being configured such that when two pieces of data transmitted collide with each other, each of the communication devices transmitting these pieces of data executes an arbitration process of comparing the identifier included in the data the communication device is transmitting and the identifier included in the other colliding data, and continuing the data transmission when the data the communication device is transmitting has a higher priority rank and stopping the data transmission when the data has a lower priority rank, the communication device including a processing circuit, the processing circuit executing: when the communication device transmits data including the identifier formed in the second format and that data collides with data transmitted by another communication device, executing the arbitration process while executing a correction process of correcting the identifier included in the data the communication device is transmitting such that the data the communication device is transmitting has a lower priority rank than the other colliding data; and when the communication device transmits data including the identifier formed in the first format and that data collides with data transmitted by another communication device, executing the arbitration process without executing the correction process.

### Supplement 2

The communication device according to Supplement 1, wherein the bit length of the identifier in the first format is shorter than the bit length of the identifier in the second format.

### Supplement 3

The communication device according to Supplement 2, wherein the bit length of the identifier in the first format is 11 bits and the bit length of the identifier in the second format is 29 bits.

### Supplement 4

The communication device according to any one of Supplements 1 to 3, wherein the communication device is an electronic control device installed in a vehicle, and wherein the processing circuit executes: forming, in the first format, a control frame that is the identifier indicating that the data is data transmitted for control of the vehicle; and forming, in the second format, a diagnostic frame that is the identifier indicating that the data is da ta transmitted for failure diagnosis of the vehicle.

### Supplement 5

The communication device according to Supplement 4, wherein the processing circuit executes forming, in the first format, a management frame that is the identifier indicating that the data is data transmitted to manage a communication state in the communication network system.

### Supplement 6

The communication device according to any one of Supplements 1 to 5, wherein: a plurality of communication devices composes a communication network; the communication network system includes a plurality of communication networks; and the communication device is a relay device that relays pieces of data exchanged among the communication networks.

### Supplement 7

A vehicle comprising the communication device according to any one of Supplements 1 to 6.

## Claims

1. A communication device (10) in a communication network system (40) which includes a plurality of communication devices (10) and in which the communication devices (10) exchange pieces of data each including an identifier through communication based on a CAN protocol,
the identifier indicating a priority rank of data and being in a format of either a first format or a second format different from the first format,
the communication network system (40) being configured such that when two pieces of data respectively transmitted from the communication devices (10) collide with each other, each of the communication devices (10) executes an arbitration process of comparing the identifier included in first data transmitted by the communication device (10) and the identifier included in colliding second data transmitted by the other communication device (10), and continuing a transmission of the first data when the first data has a higher priority rank than the second data and stopping the transmission of the first data when the first data has a lower priority rank than the second data,
the communication device (10) comprising a processing circuit (16),
the processing circuit (16) being configured to execute:
when the first data includes the identifier formed in the second format and, as a result of transmitting the first data, the first data collides with the second data transmitted by the other communication device (10), executing the arbitration process while executing a correction process of correcting the identifier included in the first data such that the first data has a lower priority rank than the colliding second data; and
when the first data includes the identifier formed in the first format and, as a result of transmitting the first data, the first data collides with the second data transmitted by the other communication device (10), executing the arbitration process without executing the correction process.

2. The communication device (10) according to claim 1, wherein a bit length of the identifier in the first format is shorter than a bit length of the identifier in the second format.

3. The communication device (10) according to claim 2, wherein the bit length of the identifier in the first format is 11 bits and the bit length of the identifier in the second format is 29 bits.

4. The communication device (10) according to any one of claims 1 to 3,
wherein the communication device (10) is an electronic control device installed in a vehicle, and
the processing circuit (16) is configured to execute:
forming, in the first format, a control frame that is the identifier indicating that the data is data transmitted for control of the vehicle; and
forming, in the second format, a diagnostic frame that is the identifier indicating that the data is data transmitted for failure diagnosis of the vehicle.

5. The communication device (10) according to claim 4, wherein the processing circuit (16) is configured to execute forming, in the first format, a management frame that is the identifier indicating that the data is data transmitted to manage a communication state in the communication network system.

6. The communication device (10) according to any one of claims 1 to 3, wherein:
the plurality of communication devices (10) composes a communication network (45); the communication network system (40) includes a plurality of communication networks (45); and
the communication devices (10) include a communication device (10) that is a relay device (20) that relays pieces of data exchanged among the communication networks (45).

7. A vehicle comprising the communication device (10) according to any one of claims 1 to 3.

8. A communication method in a communication network system (40) which has a plurality of communication devices (10) as components and in which the communication devices (10) exchange pieces of data each including an identifier through communication based on a CAN protocol,
the identifier indicating a priority rank of data and being in a format of either a first format or a second format different from the first format,
the communication network system (40) being configured such that when two pieces of data respectively transmitted from the communication devices (10) collide with each other, each of the communication devices (10) executes an arbitration process of comparing the identifier included in first data transmitted by the communication device (10) and the identifier included in colliding second data transmitted by the other communication device (10), and continuing a transmission of the first data when the first data has a higher priority rank than the second data and stopping the transmission of the first data when the first data has a lower priority rank than the second data,
the communication method comprising:
that when the first data includes the identifier formed in the second format and, as a result of transmitting the first data, the first data collides with the second data transmitted by the other communication device (10), the communication device (10) executes the arbitration process while executing a correction process of correcting the identifier included in the first data such that the first data has a lower priority rank than the colliding second data; and
that when the first data includes the identifier formed in the first format and, as a result of transmitting the first data, the first data collides with the second data transmitted by the other communication device (10), the communication device (10) executes the arbitration process without executing the correction process.

9. A non-transitory storage medium storing instructions that are executable by a processing circuit (16) of a communication device (10) in a communication network system which has a plurality of communication devices (10) as components and in which the communication devices (10) exchange pieces of data each including an identifier through communication based on a CAN protocol,
the identifier indicating a priority rank of data and being in a format of either a first format or a second format different from the first format,
the communication network system being configured such that when two pieces of data respectively transmitted from the communication devices (10) collide with each other, each of the communication devices (10) executes an arbitration process of comparing the identifier included in first data transmitted by the communication device (10) and the identifier included in colliding second data transmitted by the other communication device (10), and continuing a transmission of the first data when the first data has a higher priority rank than the second data and stopping the transmission of the first data when the first data has a lower priority rank than the second data,
the instructions causing the processing circuit (16) to perform functions comprising:
when the first data includes the identifier formed in the second format and, as a result of transmitting the first data, the first data collides with the second data transmitted by the other communication device (10), executing the arbitration process while executing a correction process of correcting the identifier included in the first data such that the first data has a lower priority rank than the colliding second data; and
when the first data includes the identifier formed in the first format and, as a result of transmitting the first data, the first data collides with the second data transmitted by the other communication device (10), executing the arbitration process without executing the correction process.
